# EUROPEAN PATENT APPLICATION

(11) **EP 4 299 775 A1**
(43) Date of publication of application: **03.01.2024**
(21) Application number: 22760143.2
(22) Date of filing: 19.01.2022
(51) Int. Cl.: C22B 11/00, C25C 1/20

(54) **METHOD FOR EXTRACTING PLATINUM AND PALLADIUM FROM SILVER ELECTROLYTES**

(30) Priority: 25.02.2021 RU 2021104839
(71) Applicant: Axion-Rare and Noble Metals JSC, Perm, 614034 (RU); Open Joint Stock Company "Krasnoyarskiy Zavod Tsvetnykh Metallov Imeni V.N. Gulidova" ("Krastsvetmet", JSC), Krasnoyarsk (RU)
(72) Inventor: KALININ, Rodion, Krasnoyarsk, 660123 (RU); PARFENOV, Vladimir, Krasnoyarsk, 660123 (RU); PONOMARENKO, Il'ya, Krasnoyarsk, 660123 (RU); TRET'YAKOV, Vitalij, Perm, 614031 (RU)
(74) Representative: Pulieri, Gianluca Antonio
(86) International application number: PCT/RU2022/050016
(87) International publication number: WO 2022/182268

(57) **Abstract**

A method for extracting platinum and palladium from silver electrolytes envisages the dissolution of a starting material, the sorption extraction of platinum metals from the silver electrolyte using an anion exchange resin, and desorption with an ammonia solution. The process of the sorption extraction of platinum and palladium from a silver electrolyte solution is carried out in parallel with a process of electrorefining silver. The silver electrolyte is circulated through a fixed sorbent bed at a rate of 1-15 column volume/hour, wherein the sorbent is saturated until a set critical value for the amount of palladium in the silver electrolyte is registered. The process can be carried out in an automatic mode with the photometric measurement of the concentration of palladium, wherein the set critical value for the amount of palladium in the silver electrolyte is registered up to a value of between 0 and 200 mg/l. The result is an increase in the productivity of a process of obtaining high-purity cathodic silver by virtue of an increase in the density of the current in the electrorefining process and a widening of the range of the permissible amounts of platinum and palladium in the anodic feedstock.

## Description

The invention relates to chemistry, in particular to the process of silver electrorefining using anodes containing platinum and palladium, and can be used in the production of high purity silver, as well as platinum and palladium.

Modern precious metals refineries are faced with the need to comply with restrictions on content of platinum and palladium in the anode raw materials during the electrorefining of silver. The essence of the problem lies in the partial transition of platinum and palladium into a nitric acid solution (silver electrolyte) of the silver electrorefining process during the anodic oxidation process. The proximity of the reduction potentials of platinum, palladium and silver leads to their joint recovery and the production of finished silver products with impurities of platinum and palladium. In addition to technological restrictions on content of platinum and palladium in silver anodes supplied for electrorefining, there are also restrictions on the current density in the technological process of silver electrorefining.

Known methods for separating palladium from nitric acid solutions by treating the solution with complexing agents and/or precipitants.

The method of selection of palladium [1. Ginsburg. Guide to the chemical analysis of platinum metals and gold. -M.: -Nauka, 1995, p.112] requires an excess of dimethylglyoxime to precipitate palladium. In particular, for every 10 mg of palladium, 25 ml of precipitant in the form of a 1% alcohol solution is required. Coprecipitation of platinum is observed at a level of 5-10% relative to the amount of palladium. As a disadvantage, the high consumption of the precipitant for separating platinum and palladium should be noted.

The extraction method of palladium [2. WU, C., LIN, Y., JIANG, L. J. Nucl. radiochem. 8, 3 (1986), p. 147] involves the introduction of formaldehyde sulfoxyl sodium salt into a palladium-containing nitric acid solution with an acidity of 0.01-1.4 M, followed by heating the mixture to 70-80 ° C, which seems impossible under industrial production conditions.

The extraction method of palladium [3. RU 2228380, 10.05.2004] consists in the precipitation of metallic palladium with carbon monoxide from nitric acid solutions. This operation requires the use of sealed process equipment and high security measures due to the use of toxic carbon monoxide.

The listed methods for extracting platinum and palladium from silver electrolytes seem to be inapplicable in the practice of large-scale production of silver by electrorefining due to the fact that they have a common significant drawback associated with a change in the qualitative composition of the electrolyte due to the use of reagents soluble in the electrolyte, and also requires the use of repetitive operations for sludge separation.

A group of methods for the sorption extraction of palladium from silver electrolytes is also known.

Method [4. JP 3199392 20.01.1989] consists in passing a silver electrolyte (Ag gog/l, Cu 1.4g/l, Pd 0.16g/l) through a fixed layer of activated carbon modified with amine chelate groups. Residual concentrations of palladium are less than 1 mg/l. Desorption is carried out by nitric and hydrochloric acids. The disadvantages of the method are the relatively low peak concentration of palladium in the desorbate: about 6 g/l, as well as the fact that the desorbate contains up to 13 g/l of silver, and, accordingly, requires an additional operation to separate silver from palladium during further processing of the desorbate.

The production method of compounds of platinum metals [5. DD 299876, 05/14/1992] consists in the implementation of ion exchange between the electrolyte and the sorbent containing iminodiacetic groups. The composition of the electrolyte contains Ag 190 g/l, Cu 35 g/l, 1.3 g/I platinum metals with solution acidity in the pH range from 0.5 to 1.5. Desorption is performed with a 2-5% ammonia solution with the addition of 1-3M sulfate or ammonium/sodium nitrate. As disadvantages of the method, one can note the high salt background of the desorbate, the presence of a significant amount of silver in the sorbed form and its accumulation in the circulating desorbate, as well as the contamination of the electrolyte with sulfate ions.

The closest in technical sense to the claimed invention is a method for the extraction of platinum metals [6. RU 2111272, 05/20/1998], in which silver-containing materials are dissolved in nitric acid, sorption is carried out on an anion exchanger, which is a copolymer of vinylpyridine and divinylbenzene, and the process of desorption with an ammonia solution with a concentration of 3-8 mol/dm3, after which a concentrate of platinum metals is isolated from the resulting desorbate . This method was chosen as a prototype.

The main disadvantage of the prototype method is the full involvement of platinum and palladium in the sorption process, due to the quantitative transition of platinum and palladium into a silver-containing nitric acid solution (silver electrolyte), which in return leads to a limitation on the maximum content of PGM in the original silver-containing raw materials. This circumstance also leads to technical difficulties in the practice of the process of sorption purification of silver electrolyte in terms of the organization of technological control.

The objective of the present invention is the extraction of platinum and palladium from a silver electrolyte during the electrorefining of silver.

The technical result of the invention is to increase the productivity of the process of obtaining high-purity cathode silver by increasing the current density of the electrorefining process and expanding the range of allowable platinum and palladium contents in the anode raw material. The technical result is achieved by the fact that in the described method for extracting platinum and palladium from silver electrolytes during the production of silver by electrolysis, including the formation of a silver electrolyte through dissolution of the starting material in a nitric acid solution, sorption extraction of platinum metals from a silver electrolyte using an anionite, desorption with an ammonia solution, according to the invention, the process of sorption extraction of platinum metals from a silver electrolyte solution is carried out simultaneously with the process of silver electrorefining. The silver electrolyte circulates through the immobile sorbent layer at a rate of 1-15 CV/h, while the sorbent is saturated until the given critical value of the palladium content in the silver electrolyte is fixed.

Saturation of the sorbent is carried out until the given critical value of the palladium content in the silver electrolyte is fixed to a value from 0 to 200 mg/l.

Fixing a given critical value of the palladium content in the silver electrolyte is determined by photometric measurements.

The conjugation of the sorption purification of the electrolyte from impurities of palladium and platinum on a selective ion exchanger makes it possible to avoid their co-precipitation with silver on the cathode during electrorefining, because critical values of concentrations at the selected current strength in the electrolyte are not achieved. In addition, up to 80% of palladium and up to 97% of platinum are removed into the sludge without entering the electrolyte, and do not require a sorbent for separation, in comparison with the complete dissolution of the silver-containing material, according to the prototype. The value of the allowable current density of the electrorefining process is directly dependent on the degree of purification of the silver electrolyte, which in return allows to increase the performance of electrorefining and, consequently, reduce the duration of the refining of silver, palladium and platinum. The possibility of using silver-containing raw materials with a high content of platinum and palladium leads to a significant reduction in consumption of reagents in the processes preceding the production of anode raw materials. Operating an electrorefining process to produce cathode silver reduces a one-time need for a sorbent in comparison with an electroextraction process of similar productivity. At the same time, high purity of the obtained products is ensured. Also, the sorption extraction of platinum and palladium from a silver electrolyte makes it possible to refuse from the operations of partial withdrawal of the electrolyte upon reaching the critical concentration of platinum or palladium, from the need to process the withdrawn electrolyte, as well as from the preparation of the electrolyte and its input into the electrorefining system instead of the withdrawn one.

The continuous use of the sorption extraction process of platinum metals from silver electrolyte in combination with the required performance of sorption equipment ensures continuous maintenance of subcritical concentrations of platinum and palladium in the cathode space. This makes it possible to expand the range of admissible platinum and palladium contents in anode raw materials, including with an increase in current density values. Continuous operational monitoring of the palladium concentration using a flow photometer at wavelengths of 380 nm and 510 nm with the setting of the critical concentration parameter for switching columns and the output of a saturated column for desorption provides the possibility of continuous automatic process. The required capacity of the sorption equipment is selected according to the criterion of the circulation rate of the silver electrolyte through the immobile sorbent layer in the range from 1 to 15 CV/h, where CV is the column volume, h is the hour. The column volume is understood as the volume of the sorbent involved in the technological stage/operation.

### Example 1. Main parameters of the electrorefining process without sorption purification of silver electrolyte from platinum and palladium.

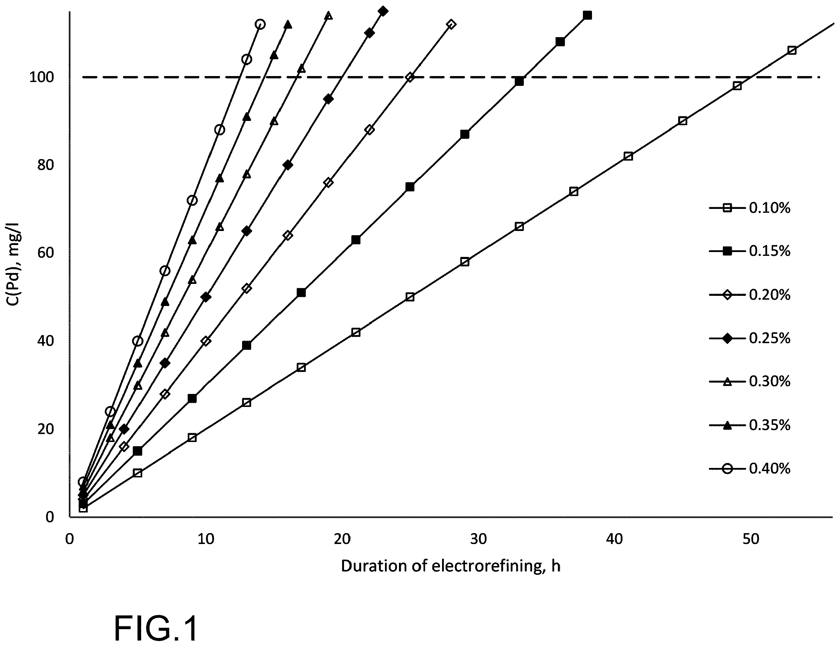

Under the conditions of long-term operation of electrorefining and the variability of the composition of the anode raw materials, the time dependences of the accumulation of palladium in the silver electrolyte were established through repeated measurement and averaging of the corresponding indicators. FIG. 1 shows these dependences at a constant current density and different palladium content in the anode raw material. The horizontal dashed line shows the critical value of the palladium content in the silver electrolyte. In the source [7. I.N. Maslenitsky, L.V. Chugaev, V.F. Borbat et al., Metallurgy of noble metals, M.: Metallurgy, 1987, 432 pp.], which is a textbook for students of higher educational institutions, the range of critical values of the concentration of palladium in the silver electrolyte is 100-200 mg/l, the excess of which requires the withdrawal of the electrolyte for processing.

The above dependences show that the rate of accumulation of palladium in the electrolyte is the higher, the higher the content of palladium in the initial anode raw material. Exceeding the critical content of palladium in the electrolyte leads to the defect of cathode silver. Such silver is sent for re-electrolysis.

The value of the critical content of palladium in the electrolyte is associated with the mode of the electrorefining process in terms of value of the current density. The current density determines the productivity of the process and is inversely proportional to the critical concentration of palladium in the electrolyte.

Re-electrolysis of defective cathode silver, frequent processing of the withdrawn electrolyte and preparation of fresh electrolyte to replace the withdrawn negatively affects the economic efficiency and productivity of the electrorefining process.

The most effective way to organize the process of electrorefining is the formation of technological restrictions on content of palladium and platinum in the anode raw materials, as well as on the value of the density so far. Such restrictions minimize the risks of obtaining defective cathode silver and reduce the volume and frequency of electrolyte replacement to an acceptable minimum. In particular, the permissible content of palladium in the anode raw material does not exceed several tenths of a mass percent, at a current density in the range of 100-300A/m2 (see Table 1).

### Example 2. Selection of optimal operation mode of the sorbent.

The situation changes radically if the electrorefining process proceeds simultaneously with the process of sorption purification from platinum and palladium of the silver electrolyte used in electrorefining. To achieve a technical result, the selection of optimal operational mode of the sorbent is required. The importance of selecting the mode of the electrorefining process in terms of choosing the current density and introducing restrictions on the composition of the anode raw material under the conditions of a parallel process of sorption purification of the electrolyte goes into the background, since it is possible to create a sorption unit with an arbitrarily excessive capacity.

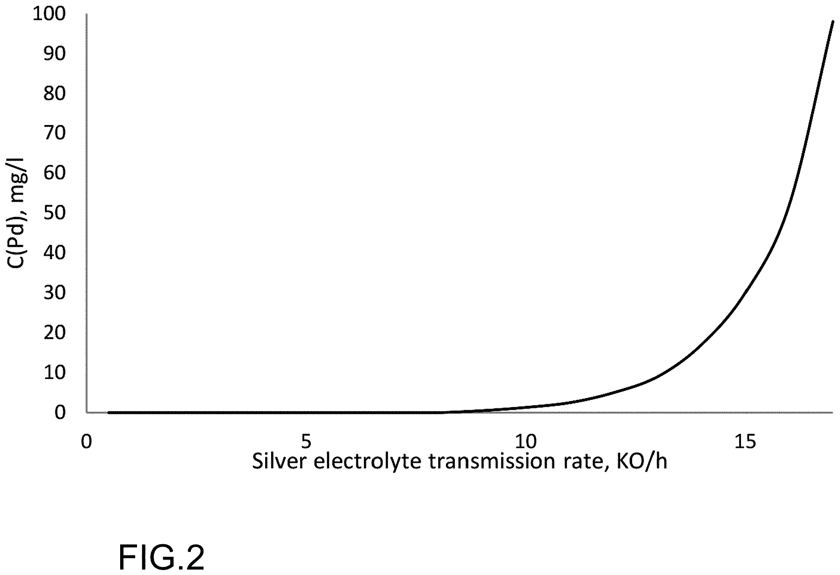

In course of the electrorefining process at a current density of 400 A/m2 and a palladium content in the anode raw material of 4.9 % mass, the rate of silver electrolyte supply for sorption purification was varied. The residual concentration of palladium in the purified electrolyte was estimated by inductively coupled plasma atomic emission spectrometry (ICP AES). FIG. 2 shows the corresponding dependence. CV/h is understood as the rate of passage of silver electrolyte through a fixed sorbent bed, where CV is the column volume, h is an hour. The column volume corresponds to the volume of the sorbent involved in the technological stage/operation.

In the range of 1-8 CV/h, a quantitative recovery of palladium is observed. By quantitative recovery is meant the residual concentration of palladium below the sensitivity threshold of the analytical method. Observed in the range of 8-15 CV/h, the Pd content in the silver electrolyte does not exceed 30-35 mg/l, which is significantly lower than the critical values noted in example 1.

The practice of joint simultaneous conduct of the sorption process and the process of electrorefining allows at least 10 times to expand the range of palladium content in the composition of the anode raw materials at least 3 times increased current density. In some cases, the sum of platinum and palladium in the anodes can reach 10%, and at a current density of up to 650-700 A/m2, high-purity cathode silver can be obtained (see Table 1).

The selected boundaries of the range of the rate of circulation of the silver electrolyte through the immobile sorbent layer are explained as follows. At a rate below 1 CV/h, the depth of palladium recovery is maintained, however, the volume of the sorbent involved in the process becomes excessive, and its operation is economically unjustified. At a transmission rate above 15 CV/h, incomplete extraction of palladium is observed, which can lead to the risk of obtaining defective cathode silver under high density conditions during the electrorefining process, and the pressure in the working volume of the sorption equipment also increases significantly. Thus, the volume of the sorbent used and the performance of the sorption equipment are selected in accordance with the composition of the anode raw material and the performance of the electrorefining process. Thus, Table 1 shows the average values of the allowable values of the current density and the palladium content in the anode raw materials for obtaining high-purity cathode silver using the process of sorption purification of the silver electrolyte and without it.

**Table 1. Values of the current density (jcathode) and palladium content in the anode raw material for obtaining cathode silver corresponding to the CpA-1 grade according to GOST 28595-2015.**

| Sorption | j_{cathode}, A/m² | C(Pd), %ₘₐₛₛ | Grade of silver geochemical field |
|---|---|---|---|
| No | 150 | 0.30 | CpA-1 |
| No | 300 | 0.15 | CpA-1 |
| Yes | 400 | 6.0 | CpA-1 |
| Yes | 600 | 4.0 | CpA-1 |

### Example 3 Complete sorption cycle.

Before use, the sorbent, which is a copolymer of vinylpyridine and divinylbenzene, was placed in four sorption columns. For each of the columns, the sorbent was transferred into a working state by passing a solution of nitric acid with a concentration of 1-5 % (mass) in an upward flow. The solution feed rate was 10 CV/h; the duration of the operation is 2 hours.

Then, a solution of silver electrolyte was supplied through 3 columns with a sorbent in a downward flow to extract palladium and platinum from a silver electrolyte under dynamic conditions at a rate of passing the processed solution through a layer of immobile sorbent 1-15 CV/h. The fourth column was placed in reserve.

The electrolyte was supplied to the sorption unit by taking the solution from the circulation tank of the silver electrorefining unit during the electrorefining process. The return of the electrolyte obtained as a result of the sorption extraction of platinum and palladium was carried out in the circulation tank of the electrorefining unit. The duration of this operation depends on the currently implemented solution supply rate, as well as on the initial concentration of palladium. Saturation of the sorbent was carried out until the specified critical value of the palladium content in the silver electrolyte was recorded in the range from 0 to 200 mg/l.

At the next stage, the sorption unit was re-switched: the most saturated column was removed from the sorption unit, and the column, which was in reserve, was connected to the unit. For the time required for the re-switching procedure, the sorption purification of the electrolyte is suspended. The switching time does not exceed 3 minutes. At the end of the reswitching, the sorption mode was resumed, and the column with saturated sorbent removed from the installation was subjected to desorption operations, after which it was transferred to the reserve.

Desorption included a sequential series of technological procedures: 1- washing the saturated sorbent with water with a downward flow (10 CV/h, 1 hour) with the displacement of the electrolyte into the circulation tank of the silver electrorefining unit and collecting the wash water into the corresponding tank; 2 - washing the saturated sorbent with a downward flow (2 CV/h, 2 hours) with an ammonia solution with a concentration of 3-8 mol/dm3 with the collection of the resulting desorbate into appropriate containers; 3 - washing of the sorbent with a solution of nitric acid with a concentration of 1-5 % (mass) with an upward flow (10 CV/h, 2 hours) with the collection of the used regenerating solution in an appropriate container.

Table 2 lists the compositions of solutions involved in the sorption cycle.

**Table 2. Composition of solutions of the silver electrolyte sorption purification cycle.**

| Solution | Content, g/l | | | | |
|---|---|---|---|---|---|
| | Aq | Pd | Pt | Cu | NHO_{3(free)} |
| Electrolyte before cleaning | 262 | 0.868 | 0.041 | 3.7 | 10 |
| Purified electrolyte (rafFinate) | 262 | <0.0005 | 0.015 | 3.7 | 10 |
| Wash waters | 7.0 | 0.285 | 0.005 | 0.1 | - |
| Desorbate concentrated | 0.9 | 50.02 | 0.940 | <0.0005 | - |
| Desorbate diluted | 0.3 | 4.82 | 0.021 | <0.0005 | - |
| Regenerating solution | 0.5 | 0.05 | <0.0005 | 0.1 | 10 |

It is important to note that in the examples, much attention is paid to the concentration of palladium in the silver electrolyte, while the claims and description thereto also refer to platinum. The reason is that the degree of transition of platinum to the silver electrolyte is very insignificant and, despite some differences in chemical properties, it is quite deeply co-extracted with palladium.

The described operations can be carried out both in the manual control mode of the equipment and in the automatic one. In the automatic mode, the key role is played by the flow photometer, continuously measuring the palladium content in the electrolyte at wavelengths of 380 and 510 nm. Exceeding the critical value of the palladium content in the electrolyte, according to the photometric determination data, makes it possible to start the procedures for re-switching the sorption unit and desorption of the saturated sorbent without human participation. Integration of the analytical signal of the photometer for 1-2 minutes makes it possible to stabilize the measurement result and minimize the risks of premature reswitching and desorption of the sorbent. When operating sorption equipment is in manual mode, the use of a flow photometer is also useful, since the estimating efficiency of the composition of the electrolyte sharply increases with no operating costs involved.

## Claims

1. The method of extracting platinum and palladium from silver electrolytes during the production of silver by electrolysis includes the formation of a silver electrolyte through the dissolution of the starting material in a nitric acid solution, the sorption extraction of platinum metals from a silver electrolyte using an anionite, desorption with an ammonia solution, **characterized in that** the process of sorption extraction of platinum metals from a silver electrolyte solution is carried out in parallel with the process of silver electrorefining, the silver electrolyte circulates through the immobile sorbent layer at a rate of 1-15 CV/h, the saturation of the sorbent is carried out until the specified critical value of the palladium content in the silver electrolyte is fixed.

2. The method according to claim 1, **characterized in that** the saturation of the sorbent is carried out until the specified critical value of the palladium content in the silver electrolyte is fixed in the range from 0 to 200 mg/l;

3. The method according to claims 1 to 2, **characterized in that** the fixation of the specified critical value of the palladium content in the silver electrolyte is determined by photometric measurements.
